# EUROPÄISCHE PATENTANMELDUNG

(11) **EP 1 579 974 A2**
(43) Veröffentlichungstag der Anmeldung: **28.09.2005**
(21) Anmeldenummer: 05002572.5
(22) Anmeldetag: 08.02.2005
(51) Int. Cl.: B29C 44/56

(54) **Verfahren zur Herstellung eines als mindestens teilweise Verkleidung von insbesonderen Schallerzeugern dienenden Verbundkörpers und Verwendung desselben**

(30) Priorität: 25.03.2004 DE 102004014682
(71) Anmelder: AKsys GmbH, 67547 Worms (DE)
(72) Erfinder: Koehnsen, Richard G., 75433 Maulbronn (DE); Pfaffelhuber, Klaus, Dr., 89312 Günzburg (DE)
(74) Vertreter: Müller, Hans-Jürgen

(57) **Zusammenfassung**

Zur Vereinfachung der Herstellung eines aus einem Trägerteil (2) und einer schallabsorbierenden/schalldämmenden Absorberschicht (3) aus Schaumstoff bestehenden Verbundkörpers (1) wird einerseits ein zur Bildung der Absorberschicht (3) dienender Schaumstoff-Rohling (5) und andererseits eine zur Bildung des Trägerteils (2) dienende plastische oder plastifizierbare Masse (6) in ein Formpresswerkzeug (4) oder Spritzgusswerkzeug eingebracht und wird dort die Masse (6) unter Anwendung von Druck und ggf. Wärme zu dem Trägerteil (2) geformt und zur Bildung des Verbundteils (1) mit der aus dem Schaumstoff-Rohling (5) verformten Absorberschicht (3) verbunden.

## Beschreibung

Die Erfindung bezieht sich auf ein Verfahren zur Herstellung eines als mindestens teilweise Verkleidung von insbesondere Schallerzeugern dienenden Verbundkörpers, der mit einem verhältnismäßig eigensteifen Trägerteil und mit einer schallabsorbierenden und/oder schalldämpfenden Absorberschicht aus Schaumstoff besteht, gemäß dem Oberbegriff des Anspruchs 1 sowie auf eine Verwendung eines derart hergestellten Verbundteils.

Üblicherweise werden derartige Verbundteile dadurch hergestellt, dass zuerst der Trägerteil hergestellt wird, indem beispielsweise thermoplastischer Kunststoff in einem Formwerkzeug in die gewünschte Konfiguration geformt und nach dem ausreichenden Erkalten aus der Form entformt wird. Anschließend erfolgt das Verbinden des Trägerteils mit der Absorberschicht, die beispielsweise gleichfalls vorgefertigt und mit dem Trägerteil verklebt oder mit diesem verschweißt wird.

Ferner ist es bekannt (DE 197 34 913 A1), eine den Trägerteil bildende Trägerschicht und die Absorberschicht ggf. mit einer zusätzlichen Verbindungsschicht im Formpresswerkzeug unter Verwendung heißer Pressluft zu erhitzen und an die Wandungen des Formpresswerkzeugs passgenau anzuformen. Dabei ist es auch bekannt, die Trägerschicht aus einem duroplastischen Halbzeug aus reaktionsfähigen Harzen, insb. UP-Harz mit Verstärkungen aus Fasermatten, oder im sogen. "SMC" (Sheet Molding Componenten-Verfahren) herzustellen.

Ferner ist es bekannt (DE 199 09 046 A1), eine Absorberschicht aus offenzelligern PUR-Schaum mit einer Füllstoffe mit rel. hohem spezifischem Gewicht aufweisenden Schwerschicht zu versehen; dabei kann die Schwerschicht durch Aufsprühen des betreffenden Schichtenmaterials auf die bereits geformte Absorberschicht appliziert werden. Nach einem anderen bekannten Verfahren (DE 102 35 091 C1) wird das Material für die Schwerschicht in einem Formwerkzeug sandwichartig zwischen einen vorgeformten Trägerteil und eine vorgeformte Absorberschicht eingelegt und nach dem Schließen des Formwerkzeugs so verteilt, dass der Zwischenraum zwischen dem Trägerteil und der Absorberschicht ausgefüllt wird.

Der Erfindung liegt die Aufgabe zugrunde, die Herstellung eines solchen Verbundkörpers, der mindestens einen verhältnismäßig eigensteifen Trägerteil und mindestens eine schallabsorbierende und/oder schalldämpfende Absorberschicht aus Schaumstoff aufweist, zu vereinfachen.

Die Erfindung ist im Anspruch 1 gekennzeichnet, was das Verfahren anbetrifft, und in Unteransprüchen sind weitere Ausbildungen der Erfindung beansprucht.

Bevorzugte Verwendungen des nach der Erfindung hergestellten Verbundkörpers sind in den Patentansprüchen 9 und 10 beansprucht.

Bei der Erfindung wird ein Schaumstoff-Rohling zusammen mit einer zur Bildung des Trägerteils dienenden plastischen, plastifizierten oder plastifizierbaren Masse in das Formpresswerkzeug oder Spritzgußwerkzeug eingebracht. Erst dort wird die Masse zu dem Trägerteil geformt und zur Bildung des Verbundteils mit dem Schaumstoff verbunden, der im Verbundkörper die Absorberschicht bildet. Im Unterschied zum Stand der Technik wird auf die Vorfertigung eines den Trägerteil bildenden Halbfertigfabrikats verzichtet, was erhebliche Einsparungen an Verfahrensschritten und -kosten bedeutet.

Überraschenderweise hat sich nämlich gezeigt, dass trotz der Verwendung eines vorgefertigten Schaumstoff-Rohlings zusammen mit der Ausgangsmasse für den im Formpress- oder Spritzgußwerkzeug herzustellenden Trägerteil sich der Schaumstoff zwar zuerst so weit zusammendrücken lässt, dass die Masse in die gewünschte Konfiguration des Verbundkörpers gelangt. Nach dem Entformen aus dem Formpresswerkzeug oder dem Spritzgusswerkzeug stellt sich der Schaumstoff jedoch wieder weitgehend in den Ursprungszustand zurück, und zwar überraschenderweise sowohl bei offenzelligen als auch bei geschlossenzelligen Schäumen. Offenzellige PUR-Schäume und geschlossenzellige PP- und PE-Schäume haben sich als sehr vorteilhaft für die Verwendung bei diesem Verfahren bewährt.

Der Schaumstoff ist nach dem Pressvorgang im übrigen auch sehr innig mit dem Trägermaterial verbunden, so dass sich nicht nur die Herstellung vereinfacht, sondern auch die Qualität der Verbindung des Verbundkörpers verbessert wird, was eine "Delaminierung" auch bei der Anwendung starker Kräfte, beispielsweise bei der Montage, verhindert.

Außerdem ist es überraschend, dass der Verbundkörper hinsichtlich der Schichtdicke des Trägerteils praktisch gleich ist wie bei einem Verbundkörper, bei dem der Trägerteil als Halbfertigprodukt vor dem Verbinden mit der Absorberschicht vorgefertigt wurde. Der Trägerteil ist an dem nicht mit der Absorberschicht abgedeckten Stellen in seiner Oberfläche auch optisch unverändert gegenüber einem vorgefertigten Trägerteil, so dass optisch praktisch kein Unterschied zu einem Verbundteil feststellbar ist, bei dem die Absorberschicht erst nachträglich auf den vorgefertigten Trägerteil aufgeklebt wurde.

Die Erfindung ist auch anwendbar bei solchen Verbundteilen, bei denen der Trägerteil beidseitig mit einer Absorberschicht abzudecken ist. Hierbei wird die plastische bzw. plastifizierbare Masse, d.h. das "Plastifikat", zwischen zwei Schaumstoff-Rohlingen eingebracht, die im Hohlraum des Formpresswerkzeugs jeweils benachbart der betreffenden Hohlraumwandung angeordnet sind. Die Masse kann auch als Pulver oder in Form von Pellets in den Hohlraum des Formpresswerkzeugs eingegeben und dort aufgeschmolzen werden.

Die Erfindung ist anwendbar sowohl bei der Verwendung von Werkstoffen für thermoplastische Kunststoffe als auch von Werkstoffen für duroplastische Kunststoffe zur Bildung des Trägerteils. Insofern sind auch GMT-, LFT-, GLF- und SMC-Verfahren anwendbar.

Im folgenden wird ein Beispiel für die erfindungsgemäße Herstellung anhand der Zeichnung veranschaulicht, bei der
- Figur 1: im Querschnitt ein Formpresswerkzeug mit eingelegtem Schaumstoff-Rohling und eingebrachter Masse,
- Figur 2: den fertigen Verbundkörper im Querschnitt schematisch veranschaulichen,
- Figur 3: eine andere Ausbildung des Verbundkörpers im Querschnitt und
- Figuren 4a 4b sowie 5a, 5b: schematische Querschnitte durch einen Dreischichten-Verbundkörper jeweils vor und nach dem Pressen bzw. Spitzgiessen zeigen.

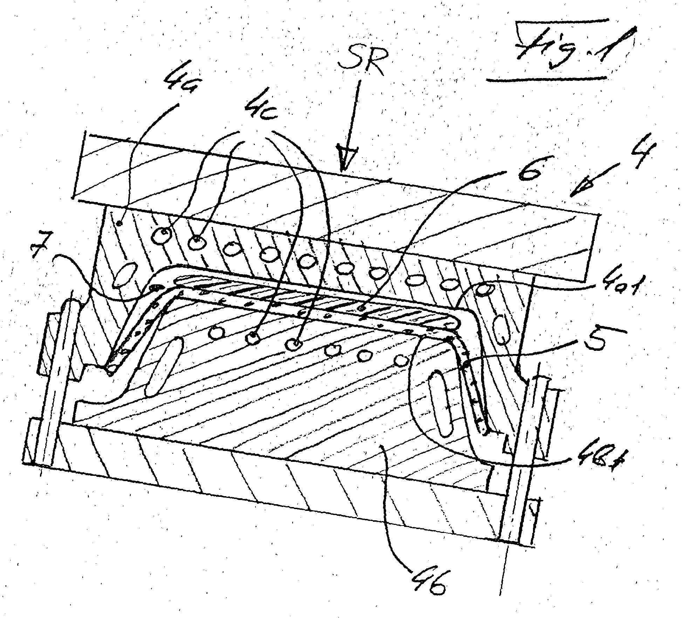

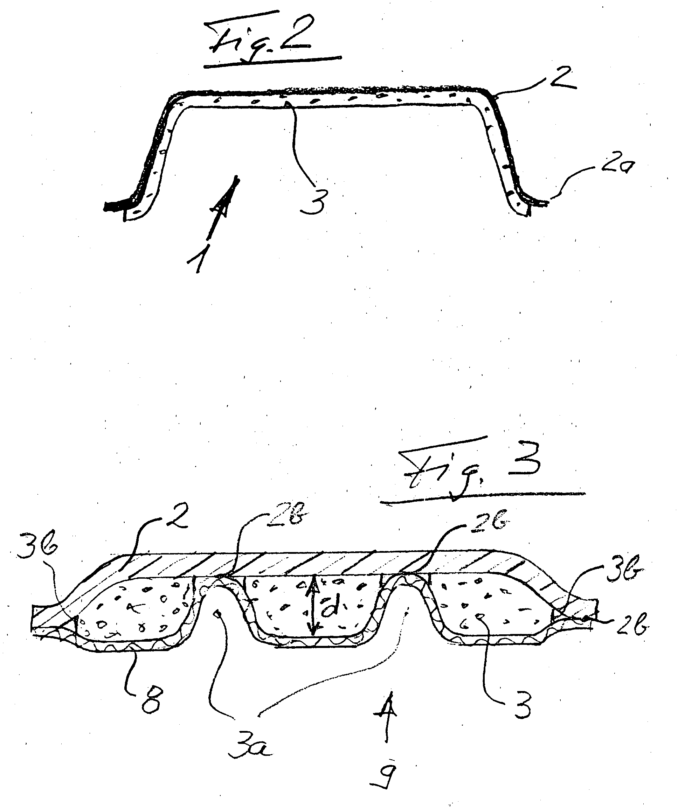

Gem. Figur 1 wird in den Formhohlraum 7 des hier noch geöffneten Formpresswerkzeugs 4 mit dem Oberteil 4a und dem Unterteil 4b ein mattenartiger Schaumstoff-Rohling 5 aus PUR-Schnittschaum eingelegt und eine plastifizierte teigige Masse 6 mit 220 C° aus glasfaserverstärktem Polypropylen (PP) eingeführt. Anschließend wird der Oberteil 4a so weit in Schließrichtung SR auf den Unterteil 4b zubewegt, dass sich der Abstand der Wände 4a1 und 4b1 voneinander so einstellt, wie die Dicke des fertigen Trägerteils 2 des in Figur 2 schematisch dargestellten Verbundkörpers 1 gewünscht wird, da beim Verpressen die Rohlingdicke fast auf Null zusammengedrückt wird.

Nach dem entsprechenden "Schließen" des Formwerkzeugs 4 findet durch Hindurchleiten eines Kühlmediums durch die Kanäle 4c ein Abkühlen der in den Hohlraum 7 eingelegten Werkstoffe statt. Die Masse 6 breitet sich genügend aus, um mit dem zusammengedrückten Schaumstoff-Rohling 5 den Formhohlraum auszufüllen, dabei wird der Rohling 5 mit einem Preßinnendruck von z.B. 250 bis 350 bar zusammengepreßt. Die Werkzeugtemperatur beträgt ca. 20 bis 60°C. Nach genügendem Abkühlen und Verfestigen der verwendeten Thermoplaste kann das Formwerkzeug 4 geöffnet und der Verbundteil 1 entformt werden; dieser weist an den Enden einen Rand 2a aus dem Thermoplast des Trägerteils 2 auf; der Rohling 5 entspannt sich dann so weit, dass der Schaumstoff wieder seinen Ursprungszustand also die Ausgangsdicke im wesentlichen wieder einnimmt.

Bei der Verarbeitung von GMT, GLF und LFT beträgt der Preßinnendruck zwischen 250 und 350 bar. Beim Spritzgießen ist ein spezifischer Spritzdruck zwischen 800 und 1400 bar und bei der Verarbeitung von SMC sind Preßinnendrücke zwischen 70 und 130 bar zu empfehlen, dabei steigt im letztgenannten Fall die Werkzeugtemperatur auf ca. 140 bis 150°C an, wenn das SMC-Halbzeug vor der Verarbeitung etwa Raumtemperatur von ca. 20°C hatte.

Ein derartiges Verbundteil 1 eignet sich besonders zur Verkleidung von Kfz-Motoren, Getrieben und anderen Schallquellen; dabei ist die Absorberschicht 3 der Schallquelle zugewandt.

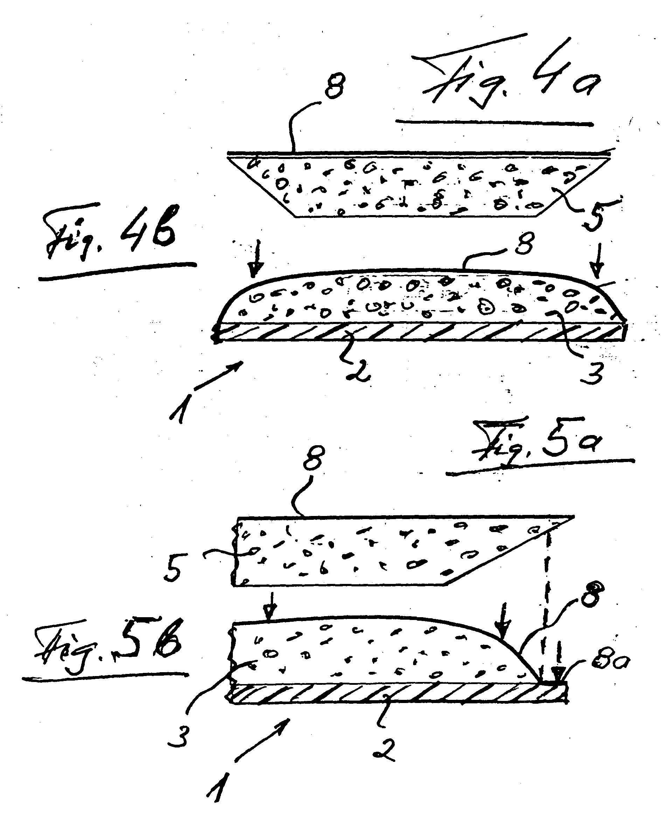

Gemäß Figur 3 ist eine als Abdeckschicht 8 vorgesehene Vliesschicht mit einem Schaumstoffrohling 3, der kreisförmige Durchbrechungen 3a aufweist, in ein in dieser Figur nicht gezeigtes Spritzgußwerkzeug eingelegt, in das durch entsprechehde Einspritzkanäle plastifizierbare bzw. plastische Masse so eingespritzt wird, dass aus dieser Masse der Trägerteil 2 innerhalb des Formhohlraums unter anfänglichem Zusammendrücken des Schaumstoffrohlings gebildet wird. Dabei überdeckt die Abdeckschicht 8 den Rand 3b der Absorberschicht 3 bzw. des Schaumstoffrohlings, so dass die Vliesschicht dort und im Bereich der Durchbrechungen 3a im Rohling in Kontakt (2b) mit der Masse des Trägerteils 2 gelangt und dort anhaftet. Entsprechend fließt die plastische Masse des Trägerteils 2 in die kreisförmigen Durchbrechungen 3a der Absorberschicht 3 ein, um auch dort unter Bildung von im Querschnitt kreisförmigen Verbindungsstegen 2a eine Verbindung zur Vliesschicht der Abdeckschicht 8 einzugehen. Nach dem Abkühlen und Entformen entspannt sich der Schaumstoff wieder und nimmt in etwa die in Fig. 3 schematisch gezeigte Querschnittform an mit einer Dicke d von etwa der Rohlingdicke vor dem Pressen bzw. Spritzgiessen.

Die Abdeckschicht 8 kann mit einem Dekor versehen sein, um auch ästhetischen Aspekten zu genügen. Anstelle des Vliesstoffes kann auch eine Art "Teppichstoff" mit hochstehenden Fasern bzw. Fäden Anwendung finden, so dass nicht nur der die spätere Absorberschicht 3 bildende Schaumstoff, sondern auch die Abdeckschicht 8 während des Spritzpressens ein Stück weit zusammengepresst wird, sich aber beide nach dem Entformen wieder soweit entspannen bzw. in den ursprünglichen Schaumstoff- bzw. Vliesstoff- oder Teppichstoffzustand übergehen.

In Figur 4a ist im Querschnitt ein an den Rändern um etwa 45° schräg abgeschnittener Rohling 5 aus PUR-Schaumstoff mit einer aufgelegten oder aufgeklebten und als Folie ausgebildeten Abdeckschicht 8 dargestellt, ehe sie im Preß- bzw. Spritzgieß- oder auch Spritzprägwerkzeug eingelegt ist. In Figur 4b ist im Querschnitt die sich durch das Pressen bzw. Spritzgießen oder Spritzprägen ergebende Form des Verbundteils 1 gezeigt, bei dem infolge des Schrägschnitts der Rohling 5 am Rand bis zum Trägerteil 2 hinabgedrückt ist und die Folie der Abdeckschicht 8 den Rand der Absorberschicht 3 abdeckt.

Eine noch weitere Verbesserung ist aus Figur 5a und 5b ersichtlich, wonach infolge der Druck- bzw. Preßkräfte (in Pfeilrichtung) der Rand 8a der Abdeckschicht 8 nach dem Herstellen des Verbundkörpers 1 bis auf den Trägerteil 2 hinabgedrückt und mit diesem verbunden ist. Der Randbereich des Rohlings 5 von Figur 5a ist dort gemäß Figur 5b in das Material des Trägerteils 1 integriert als Folge der Preßkräfte und der beim Pressen bzw. Spritzgießen oder -prägen vorhandenen Temperatur. Der Rand 8

## Patentansprüche

1. Verfahren zur Herstellung eines als mindestens teilweise Verkleidung von insbesondere Schallerzeugern dienenden Verbundkörpers (1), der einen verhältnismäßig eigensteifen Trägerteil (2) und eine schallabsorbierende und/oder - dämpfende Absorberschicht (3) aus Schaumstoff aufweist, bei dem der Trägerteil (2) und die Absorberschicht (3) unter Anwendung von Druck und ggf. Wärme in einem Formpress- oder Spritzgußwerkzeug (4) zu dem Verbundkörper (1) verformt und formschlüssig miteinander verbunden werden,
**dadurch gekennzeichnet,**
**dass** einerseits ein zur Bildung der Absorberschicht (3) dienender Rohling (5) aus Schaumstoff und andererseits eine zur Bildung des Trägerteils (2) dienende plastische oder plastifizierbare Masse (6) in das Spritzguß- oder Formpresswerkzeug (4) eingebracht werden und dass die Masse (6) dort zu dem Trägerteil (2) geformt und zur Bildung des Verbundteils (1) mit der Absorberschicht (3) verbunden wird.

2. Verfahren zur Herstellung eines als mindestens teilweise Verkleidung von Schallerzeugern dienenden Verbundkörpers (1), der einen verhältnismäßig eigensteifen Trägerteil (2) und eine schallabsorbierende und/oder -dämpfende Absorberschicht (3) aus porösem Werkstoff aufweist, bei dem der Trägerteil (2) und die Absorberschicht (3) unter Anwendung von Druck und ggf. Wärme in einem Formpress- oder Spritzgußwerkzeug (4) zu dem Verbundkörper (1) verformt und formschlüssig miteinander verbunden werden,
**dadurch gekennzeichnet,**
**dass** einerseits ein zur Bildung der Absorberschicht (3) dienender Rohling (5) aus Vliesstoff oder einer Teppichstruktur und andererseits eine zur Bildung des Trägerteils (2) dienende plastische oder plastifizierbare Masse (6) in das Spritzguß- oder Formpresswerkzeug (4) eingebracht werden und dass die Masse (6) dort zu dem Trägerteil (2) geformt und zur Bildung des Verbundteils (1) mit der Absorberschicht (3) verbunden wird.

3. Verfahren nach Anspruch 1,
**dadurch gekennzeichnet,**
**dass** eine offenzellige PUR-Schaumschicht als Rohling (5) verwendet wird.

4. Verfahren nach Anspruch 1,
**dadurch gekennzeichnet,**
**dass** eine geschlossenzellige PP- oder PE-Schaumschicht als Rohling (5) verwendet wird.

5. Verfahren nach einem der vorhergehenden Ansprüche,
**dadurch gekennzeichnet,**
**dass** die Masse (6) zwischen zwei Rohlinge (5) in das Spritzguß- oder Formpresswerkzeug (4) eingebracht wird.

6. Verfahren nach einem der vorhergehenden Ansprüche,
**dadurch gekennzeichnet,**
**dass** zur Bildung eines thermoplastischen Kunststoffs dienende Werkstoffe für die Masse (6) verwendet werden.

7. Verfahren nach einem der Ansprüche 1 bis 5,
**dadurch gekennzeichnet,**
**dass** zur Bildung eines duroplastischen Kunststoffs dienende Werkstoffe für die Masse (6) verwendet werden.

8. Verfahren nach einem der vorhergehenden Ansprüche,
**dadurch gekennzeichnet,**
**dass** die Masse (6) in ein mit dem Rohling (5) bestücktes geschlossenes Formwerkzeug im Spritzgussverfahren eingespritzt wird.

9. Verfahren nach einem der vorhergehenden Ansprüche,
**dadurch gekennzeichnet,**
**dass** eine mit Verstärkungsfasern versehene Masse (6) verwendet wird.

10. Verfahren nach einem der vorhergehenden Ansprüche,
**dadurch gekennzeichnet,**
**dass** der zur Bildung der Absorberschicht (3) dienende Rohling (5) aus Schaumstoff, die zur Bildung des Trägerteils (2) dienende plastische und plastifizierbare Masse (6) und ein als Abdeckschicht (8) dienender Vlies- oder Teppichstoff oder eine Folie derart in das Spritzguß- oder Formpresswerkzeug (4) eingebracht werden, dass sich der Rohling (5) aus Schaumstoff im wesentlichen zwischen der Abdeckschicht (8) und der Masse (6) befindet und die Masse (6) dort zum Trägerteil (2) geformt wird.

11. Verfahren nach Anspruch 10,
**dadurch gekennzeichnet,**
**dass** ein Rohling (5) mit kleineren Aussenmaßen als die Abdeckschicht (8) verwendet wird.

12. Verfahren nach Anspruch 10 und 11,
**dadurch gekennzeichnet,**
**dass** ein mit Durchbrechungen (3a) versehener Rohling (5) verwendet und die Abdeckschicht (8) dort mit dem Trägerteil (2) verbunden wird.

13. Verfahren nach Anspruch 10 bis 12,
**dadurch gekennzeichnet,**
**dass** die Abdeckschicht (8) vor dem Einbringen in das Spritzguß- oder Formpresswerkzeug (4) mit dem Rohling (5) verbunden wird.

14. Verfahren nach einem der vorhergehenden Ansprüche,
**dadurch gekennzeichnet,**
**dass** der Verbundkörper (1) durch Spritzprägen hergestellt wird.

15. Verwendung eines nach einem oder mehreren der vorhergehenden Ansprüche hergestellten Verbundkörpers (1) als einen Motor mindestens teilweise verkleidende Geräuschkapsel.

16. Verwendung eines nach einem oder mehreren der Ansprüche 1 bis 13 hergestellten Verbundkörpers (1) als Getriebeverkleidung.

17. Verwendung eines nach einem oder mehreren der Ansprüche 1 bis 14 hergestellten Verbundkörpers (1) als Verkleidung (9) von Fahrzeugwänden, -decken und/oder -böden.
